# EUROPEAN PATENT APPLICATION

(11) **EP 3 590 579 A2**
(43) Date of publication of application: **08.01.2020**
(21) Application number: 19184765.6
(22) Date of filing: 05.07.2019
(51) Int. Cl.: A62C 3/08, A62C 99/00, B64D 37/32

(54) **PRESSURIZED INERTING SYSTEM**

(30) Priority: 06.07.2018 US 201816029024
(71) Applicant: Hamilton Sundstrand Corporation, Charlotte, NC 28217-4578 (US)
(72) Inventor: RHEAUME, Jonathan, West Hartford, CT Connecticut 06119 (US)
(74) Representative: Dehns

(57) **Abstract**

A system for providing inerting gas to a protected space is disclosed. The system includes an electrochemical cell (10) that produces inerting gas on a cathode fluid flow path, and delivers it to an inerting gas flow path is disposed in operative fluid communication with the cathode fluid flow path outlet and the protected space. The inerting gas flow path includes a condenser that receives inerting gas from the cathode fluid flow path outlet, and also includes a pressure control device configured along with the pressurized gas source to provide a pressure at the condenser greater than ambient pressure.

## Description

### BACKGROUND

The subject matter disclosed herein generally relates to systems for providing inerting gas, and more particularly to inerting systems for aircraft fuel tanks.

It is recognized that fuel vapors within fuel tanks become combustible or explosive in the presence of oxygen. An inerting system decreases the probability of combustion or explosion of flammable materials in a fuel tank by maintaining a chemically non-reactive or inerting gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration by introducing an inerting gas such as nitrogen-enriched air (NEA) (i.e., oxygen-depleted air or ODA) to the ullage, thereby displacing oxygen with a mixture of nitrogen and oxygen at target thresholds for avoiding explosion or combustion.

It is known in the art to equip aircraft with onboard inerting gas generating systems, which supply nitrogen-enriched air to the vapor space (i.e., ullage) within the fuel tank. The nitrogen-enriched air has a substantially reduced oxygen content that reduces or eliminates oxidizing conditions within the fuel tank. Onboard inerting gas generating systems typically use membrane-based gas separators. Such separators contain a membrane that is permeable to oxygen and water molecules, but relatively impermeable to nitrogen molecules. A pressure differential across the membrane causes oxygen molecules from air on one side of the membrane to pass through the membrane, which forms oxygen-enriched air (OEA) on the low-pressure side of the membrane and NEA on the high-pressure side of the membrane. The requirement for a pressure differential necessitates a source of compressed or pressurized air. Bleed air from an aircraft engine or from an onboard auxiliary power unit can provide a source of compressed air; however, this can reduce available engine power and also must compete with other onboard demands for compressed air, such as the onboard air environmental conditioning system and anti-ice systems. Moreover, certain flight conditions such as during aircraft descent can lead to an increased demand for NEA at precisely the time when engines could be throttled back for fuel savings so that maintaining sufficient compressed air pressure for meeting the pneumatic demands may come at a significant fuel burn cost. Additionally, there is a trend to reduce or eliminate bleed-air systems in aircraft; for example Boeing's 787 has a no-bleed systems architecture, which utilizes electrical systems to replace most of the pneumatic systems to improve fuel efficiency, as well as reduce weight and lifecycle costs. Other aircraft architectures may adopt low-pressure bleed configurations where engine design parameters allow for a bleed flow of compressed air, but at pressures less than the 45 psi air (unless stated otherwise, "psi" as used herein means absolute pressure in pounds per square inch, i.e., psia) that has been typically provided in the past to conventional onboard environmental control systems. A separate compressor or compressors can be used to provide pressurized air to the membrane gas separator, but this undesirably increases aircraft payload, and also represents another onboard device with moving parts that is subject to maintenance issues or device failure.

### BRIEF DESCRIPTION

A system for providing inerting gas to a protected space is disclosed. The system includes an electrochemical cell comprising a cathode and an anode separated by a separator comprising an ion transfer medium. A cathode fluid flow path is disposed in operative fluid communication with the cathode between a cathode fluid flow path inlet and a cathode fluid flow path outlet. A cathode supply fluid flow path is disposed between a pressurized gas source and the cathode fluid flow path inlet. An anode fluid flow path is disposed in operative fluid communication with the anode, including an anode fluid flow path outlet. The system also includes an electrical connection to a power source or power sink. The system produces inerting gas on the cathode fluid flow path, and an inerting gas flow path is disposed in operative fluid communication with the cathode fluid flow path outlet and the protected space. The inerting gas flow path includes a condenser that receives inerting gas from the cathode fluid flow path outlet, and also includes a pressure control device configured along with the pressurized gas source to provide a pressure at the condenser greater than ambient pressure.

Also disclosed is a method of inerting a protected space. The method includes delivering pressurized gas comprising oxygen to a cathode of an electrochemical cell, reducing oxygen at the cathode to generate oxygen-depleted air at the cathode of the electrochemical cell, directing the oxygen-depleted air from the cathode of the electrochemical cell along an inerting gas flow path to the protected space, and condensing water vapor from the oxygen-depleted air in a condenser on the inerting gas flow path and keeping pressure at the condenser greater than ambient pressure.

In any one or combination of the foregoing embodiments, the pressure control device and pressurized gas source can be configured to provide a pressure at the condenser at which a dew point of the inerting gas is greater than 0°C.

In any one or combination of the foregoing embodiments, the pressure control device and pressurized gas source are configured to provide a pressure at the condenser at which a dew point of the inerting gas is greater than ambient temperature.

In any one or combination of the foregoing embodiments, the pressure control device and pressurized gas source are configured to provide a pressure greater than 29 psia.

In any one or combination of the foregoing embodiments, the pressure control device and pressurized gas source are configured to provide a pressure greater than 44 psia.

In any one or combination of the foregoing embodiments, the condenser comprises a heat exchanger with a heat rejection side in fluid communication with the inert gas flow path and a heat absorption side in thermal communication with a heat sink.

In any one or combination of the foregoing embodiments, the heat absorption side of the condenser is in fluid communication with ambient air as said heat sink.

In any one or combination of the foregoing embodiments, the inert gas flow path further includes a membrane dryer.

In any one or combination of the foregoing embodiments, the ion transfer medium comprises a proton exchange membrane, and the electrochemical cell is configured to produce protons at the anode and transfer the protons across the proton exchange membrane to the cathode.

In any one or combination of the foregoing embodiments, the ion transfer medium comprises a solid oxide, and the electrochemical cell is configured to produce oxygen anions at the cathode and transfer the oxygen anions across the solid oxide ion transfer medium to the anode.

In any one or combination of the foregoing embodiments, the inerting gas flow path is further in operative communication with a fire suppression system.

In some embodiments, an aircraft comprises an aircraft body and an engine, and the system of any one or combination of the foregoing embodiments.

In any one or combination of the foregoing embodiments, the aircraft protected space is selected from a fuel tank ullage space, a cargo hold, or an equipment bay.

In any one or combination of the foregoing embodiments, the aircraft protected space comprises a fuel tank ullage space.

### BRIEF DESCRIPTION OF THE DRAWINGS

The following descriptions should not be considered limiting in any way. With reference to the accompanying drawings in which like elements are numbered alike:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic depiction an example embodiment of an electrochemical cell;
FIG. 3 is a schematic illustration of an example embodiment of an electrochemical inerting system;
FIG. 4 is a schematic illustration of an example embodiment of an PEM electrochemical cell inerting system; and
FIG. 5 is a schematic illustration of an example embodiment of a solid oxide electrochemical cell inerting system.

### DETAILED DESCRIPTION

A detailed description of one or more embodiments of the disclosed apparatus and method are presented herein by way of exemplification and not limitation with reference to the Figures

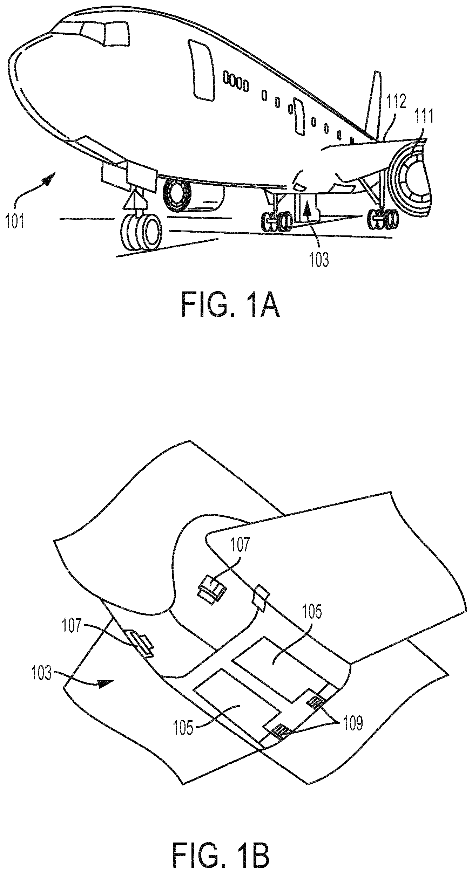

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft, air that is external to the aircraft can flow into one or more ram air inlets 107. The outside air may then be directed to various system components (e.g., environmental conditioning system (ECS) heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to environmental control systems and/or fuel inerting systems, as will be appreciated by those of skill in the art.

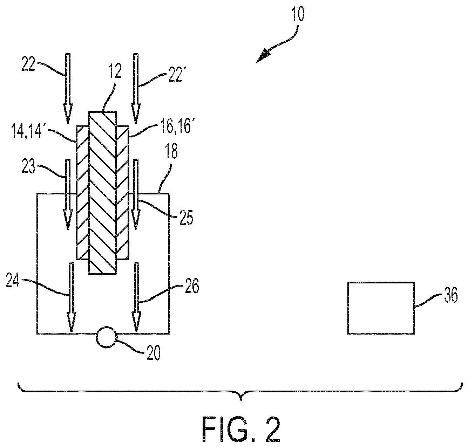

Referring now to FIG. 2, an electrochemical cell is schematically depicted. The electrochemical cell 10 comprises a separator 12 that includes an ion transfer medium. As shown in FIG. 2, the separator 12 has a cathode 14 disposed on one side and an anode 16 disposed on the other side. Cathode 14 and anode 16 can be fabricated from catalytic materials suitable for performing the needed electrochemical reaction (e.g., the oxygen-reduction reaction at the cathode and an oxidation reaction at the anode). Exemplary catalytic materials include, but are not limited to, nickel, platinum, palladium, rhodium, carbon, gold, tantalum, titanium, tungsten, ruthenium, iridium, osmium, zirconium, alloys thereof, and the like, as well as combinations of the foregoing materials. Some organic materials and metal oxides can also be used as catalysts, as contrasted to electrochemical cells utilizing proton exchange membranes where the conditions preclude the use of metal oxide catalysts. Examples of metal oxide catalysts include, but are not limited to ruthenium oxides, iridium oxides or transition-metal oxides, generically depicted as MₓO_{y}, where x and y are positive numbers capable of forming a stable catalytic metal oxide such as Co₃O₄. Cathode 14 and anode 16, including catalyst 14' and catalyst 16', are positioned adjacent to, and preferably in contact with the separator 12 and can be porous metal layers deposited (e.g., by vapor deposition) onto the separator 12, or can have structures comprising discrete catalytic particles adsorbed onto a porous substrate that is attached to the separator 12. Alternatively, the catalyst particles can be deposited on high surface area powder materials (e.g., graphite or porous carbons or metal-oxide particles) and then these supported catalysts may be deposited directly onto the separator 12 or onto a porous substrate that is attached to the separator 12. Adhesion of the catalytic particles onto a substrate may be by any method including, but not limited to, spraying, dipping, painting, imbibing, vapor depositing, combinations of the foregoing methods, and the like. Alternately, the catalytic particles may be deposited directly onto opposing sides of the separator 12. In either case, the cathode and anode layers 14 and 16 may also include a binder material, such as a polymer, especially one that also acts as an ionic conductor such as anion-conducting ionomers. In some embodiments, the cathode and anode layers 14 and 16 can be cast from an "ink," which is a suspension of supported (or unsupported) catalyst, binder (e.g., ionomer), and a solvent that can be in a solution (e.g., in water or a mixture of alcohol(s) and water) using printing processes such as screen printing or ink jet printing.

The cathode 14 and anode 16 can be controllably electrically connected by electrical circuit 18 to a controllable electric power system 20, which can include a power source (e.g., DC power rectified from AC power produced by a generator powered by a gas turbine engine used for propulsion or by an auxiliary power unit) and optionally a power sink. In some embodiments, the electric power system 20 can optionally include a connection to an electric power sink (e.g., one or more electricity-consuming systems or components onboard the vehicle) with appropriate switching, power conditioning, or power bus(es) for such on-board electricity-consuming systems or components, for optional operation in an alternative fuel cell mode. Inerting gas systems with electrochemical cells that can alternatively operate to produce nitrogen-enriched air in a fuel-consuming power production (e.g., fuel cell) mode or a power consumption mode (e.g., electrolyzer cell) are disclosed in US patent application publication no. 2017/0331131 A1.

With continued reference to FIG. 2, a cathode supply fluid flow path 22 directs gas from an air source (not shown) into contact with the cathode 14. Oxygen is electrochemically depleted from air along the cathode fluid flow path 23, and is discharged as nitrogen-enriched air (NEA) (i.e., oxygen-depleted air, ODA) to an inerting gas flow path 24 for delivery to an on-board fuel tank (not shown), or to a vehicle fire suppression system associated with an enclosed space (not shown), or controllably to either or both of a vehicle fuel tank or an on-board fire suppression system. An anode fluid flow path 25 is configured to controllably receive an anode supply fluid from an anode supply fluid flow path 22'. The anode fluid flow path 25 can include water if the electrochemical cell is configured for proton transfer across the separator 12 (e.g., a proton exchange membrane (PEM) electrolyte or phosphoric acid electrolyte). If the electrochemical cell is configured for oxygen anion transfer across the separator 12 (e.g., a solid oxide electrolyte), it can optionally be configured to receive air along the anode fluid flow path 25. Although not stoichiometrically required by the electrochemical reactions of the solid oxide electrochemical cell, airflow to the anode during power-consumption mode can have the technical effects of diluting the potentially hazardous pure heated oxygen at the anode, and providing thermal regulation to the cell. If the system is configured for alternative operation in a fuel cell mode, the anode fluid flow path 25 can be configured to controllably also receive fuel (e.g., hydrogen for a proton-transfer cell, hydrogen or hydrocarbon reformate for a solid oxide cell). Anode exhaust 26 can, depending on the type of cell and the anode exhaust content, be exhausted or subjected to further processing. Control of fluid flow along these flow paths can be provided through conduits and valves (not shown), which can be controlled by a controller 36.

In some embodiments, the electrochemical cell 10 can operate utilizing the transfer of protons across the separator 12. Exemplary materials from which the electrochemical proton transfer electrolytes can be fabricated include proton-conducting ionomers and ion-exchange resins. Ion-exchange resins useful as proton conducting materials include hydrocarbon- and fluorocarbon-type resins. Fluorocarbon-type resins typically exhibit excellent resistance to oxidation by halogen, strong acids, and bases. One family of fluorocarbon-type resins having sulfonic acid group functionality is NAFION™ resins (commercially available from E. I. du Pont de Nemours and Company, Wilmington, Del.). Alternatively, instead of an ion-exchange membrane, the separator 12 can be comprised of a liquid electrolyte, such as sulfuric or phosphoric acid, which may preferentially be absorbed in a porous-solid matrix material such as a layer of silicon carbide or a polymer than can absorb the liquid electrolyte, such as poly(benzoxazole). These types of alternative "membrane electrolytes" are well known and have been used in other electrochemical cells, such as phosphoric-acid fuel cells.

During operation of a proton transfer electrochemical cell in the electrolyzer mode, water at the anode undergoes an electrolysis reaction according to the formula

H₂O → ½O₂ + 2H⁺ + 2e⁻ (1)

The electrons produced by this reaction are drawn from electrical circuit 18 powered by electric power source 20 connecting the positively charged anode 16 with the cathode 14. The hydrogen ions (i.e., protons) produced by this reaction migrate across the separator 12, where they react at the cathode 14 with oxygen in the cathode flow path 23 to produce water according to the formula

½O₂ + 2H⁺ + 2e⁻ → H₂O (2)

Removal of oxygen from cathode flow path 23 produces nitrogen-enriched air exiting the region of the cathode 14. The oxygen evolved at the anode 16 by the reaction of formula (1) is discharged as oxygen or an oxygen-enriched air stream as anode exhaust 26.

During operation of a proton transfer electrochemical cell in a fuel cell mode, fuel (e.g., hydrogen) at the anode undergoes an electrochemical oxidation according to the formula

H₂ → 2H⁺ + 2e⁻ (3)

The electrons produced by this reaction flow through electrical circuit 18 to provide electric power to an electric power sink (not shown). The hydrogen ions (i.e., protons) produced by this reaction migrate across the separator 12, where they react at the cathode 14 with oxygen in the cathode flow path 23 to produce water according to the formula (2).

½O₂ + 2H⁺ + 2e⁻ → H₂O (2)

Removal of oxygen from cathode flow path 23 produces nitrogen-enriched air exiting the region of the cathode 14.

As mentioned above, the electrolysis reaction occurring at the positively charged anode 16 requires water, and the ionic polymers used for a PEM electrolyte perform more effectively in the presence of water. Accordingly, in some embodiments, a PEM membrane electrolyte is saturated with water or water vapor. Although the reactions (1) and (2) are stoichiometrically balanced with respect to water so that there is no net consumption of water, in practice moisture will be removed by NEA 24 (either entrained or evaporated into the nitrogen-enriched air) as it exits from the region of cathode 14. Accordingly, in some exemplary embodiments, water is circulated past the anode 16 along an anode fluid flow path (and optionally also past the cathode 14). Such water circulation can also provide cooling for the electrochemical cells. In some exemplary embodiments, water can be provided at the anode from humidity in air along an anode fluid flow path in fluid communication with the anode. In other embodiments, the water produced at cathode 14 can be captured and recycled to anode 16 (not shown). It should also be noted that, although the embodiments are contemplated where a single electrochemical cell is employed, in practice multiple electrochemical cells will be electrically connected in series with fluid flow to the multiple cathode and anode flow paths routed through manifold assemblies.

In some embodiments, the electrochemical cell 10 can operate utilizing the transfer of oxygen anions across the separator 12. Exemplary materials from which the electrochemical oxygen anion-transporting electrolytes can be fabricated include solid oxides such as yttria-stabilized zirconia and/or ceria doped with rare earth metals.

These types of materials are well known and have been used in solid oxide fuel cells (SOFC).

During operation of an oxygen anion transfer electrochemical cell in a power consuming (e.g., electrolyzer) mode, oxygen at the cathode undergoes an electrochemical reduction reaction according to the formula

½O₂ + 2e⁻ → O⁼ (4)

The electrons consumed by this reaction are drawn from electrical circuit 18 powered by electric power source 20 connecting the positively charged anode 16 with the cathode 14. The oxygen anions produced by this reaction migrate across the separator 12, where they undergo an electrochemical oxidation reaction at the anode 14 according to the formula

O⁼ → ½O₂ + 2e⁻ (5)

Removal of oxygen from cathode flow path 24 produces nitrogen-enriched air exiting the region of the cathode 14. The oxygen produced at the anode 16 by the reaction of formula (5) is discharged as oxygen or an oxygen-enriched air stream as anode exhaust 26.

During operation of an oxygen ion transfer electrochemical cell in a fuel cell mode, oxygen at the cathode undergoes an electrochemical reduction reaction according to the formula

½O₂ + 2e → O⁻ (4)

The electrons consumed by this reaction are drawn from electrons liberated at the anode, which flow through electrical circuit 18 to provide electric power to electric power sink (not shown). The oxygen anions produced by this reaction migrate across the separator 12, where they react with fuel such as hydrogen at the anode according to the formula

H₂ + O⁻ → H₂O + 2e⁻ (6)

Carbon monoxide (e.g., contained in fuel reformate) can also serve as fuel in solid oxide electrochemical cells. In this case, the oxygen anions produced at the cathode according to formula (4) migrate across the separator 12 where they react with carbon monoxide at the anode according to the formula

CO + O⁻ → CO2 + 2e⁻ (7)

Removal of oxygen from cathode flow path 24 produces nitrogen-enriched air exiting the region of the cathode 14. The steam and carbon dioxide produced at the anode 16 by the reactions of formulas (6) and (7) respectively is discharged along with unreacted fuel as anode exhaust 26. The unreacted fuel that exits anode 16 via anode exhaust flow path 26 can be recycled to fuel flow path 32 using an ejector or blower (not shown). It can also be fed to a fuel processing unit wherein the steam and carbon dioxide contribute to reforming.

In some embodiments, a controller 36 can be in operative communication with the electrochemical cell, the membrane gas separator, and any associated valves, pumps, compressors, conduits, or other fluid flow components, and with switches, inverters, regulators, sensors, and other electrical system components, and any other system components to selectively operate the inerting gas system. These control connections can be through wired electrical signal connections (not shown) or through wireless connections. In some embodiments, the controller 36 can be configured to operate the system according to specified parameters, as discussed in greater detail further below.

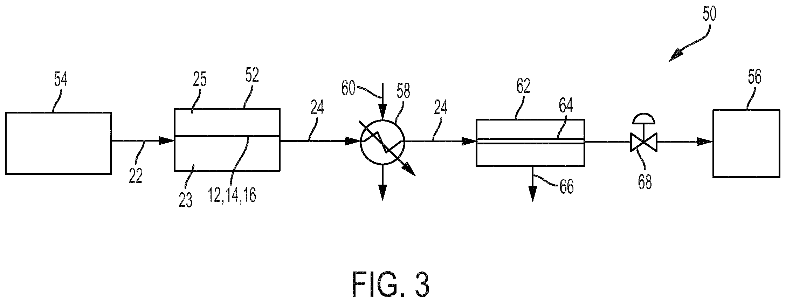

Turning now to FIG. 3, there is shown an inerting system 50 with an electrochemical cell stack 52 that receives flow from a cathode supply fluid flow path 22 from a pressurized gas source 54 such as a compressor section of a gas turbine engine. The electrochemical cell stack 52 is electrically connected to a power source or sink (not shown). Pressurized oxygen-containing gas (e.g., compressed air) from the pressurized air source 54 is directed to the cathode fluid flow path 23 along the cathodes in the cell stack. In some embodiments, one or more gas treatment modules can be disposed in series or parallel along the cathode supply fluid flow path 22. In some embodiments, the gas treatment module can be configured to remove contaminants such as organic compounds from the cathode supply gas. Examples of gas treatments include filters, membrane separators (e.g., a reverse selective membrane with a membrane that has greater solubility with fuel vapor than air) with an optional sweep gas on the side of the membrane opposite the cathode supply fluid flow path, or adsorbents (e.g., activated carbon adsorbent as a fuel vapor trap).

With continued reference to FIG. 3, oxygen-depleted air is discharged from the cathode side of the electrochemical cells in the electrochemical cell stack 52 along the inerting gas flow path 24 toward protected space(s) 56 to a condenser 58. Condenser 58 is shown configured as a heat exchanger condenser (i.e., a heat exchanger in which removal of heat condenses water vapor to liquid water, which is separated from the gas stream) in thermal communication with a cold sink 60. In some embodiments, an additional water removal module can be disposed on the inerting gas flow path 24. Examples of water removal modules include (additional) heat exchanger condensers, membrane separators, or desiccants. FIG. 3 shows a membrane separator 62 with a water-permeable tubular membrane 64 for removal of additional water 66. In some embodiments or operating conditions (e.g., on-ground operation on hot days), the heat exchanger condenser 58 may not remove all of the desired amount of water to be removed, so supplemental drying can optionally be provided. A pressure control device 68 (e.g., a pressure regulator valve) is disposed along the inert gas flow path 24 between the membrane separator 62 and the protected space(s) 56. The pressure control device 68 can be configured, along with the pressure of the pressurized air source 54, to maintain pressure at the condenser 58 at various levels for different operating conditions. For example, in some embodiments such as on-board an aircraft during flight, the condensation temperature at which a desired amount of water can be removed from the inerting gas can actually be below 0°C at ambient pressure, and since it must be operated above 0°C to avoid icing, an insufficient amount of water may be removed. However, increasing the pressure of the water-containing inerting gas can increase the dew point to a temperature above 0°C for effective removal of water. In another example, in which the system is operated on the ground on a hot day, the temperature of available outside cooling air on the heat absorption side of a heat exchanger condenser may not be cold enough to condense a desired amount of water. However, increasing the pressure of the water-containing inerting gas can shift the equilibrium toward condensation of greater amounts of water, and in some embodiments the pressure at the condenser 58 can be kept at a level for the dew point to be greater than ambient temperature to provide a maximum amount of water removal. In some embodiments, pressure can be set 2 atm absolute pressure. In some embodiments, pressure can be set for at least 2 atm absolute pressure. In some embodiments, pressure can be set at 3 atm absolute pressure. In some embodiments, pressure can be set for at least 3 atm absolute pressure. In some embodiments, pressure can be set at a pressure of 2-3 atm absolute pressure.

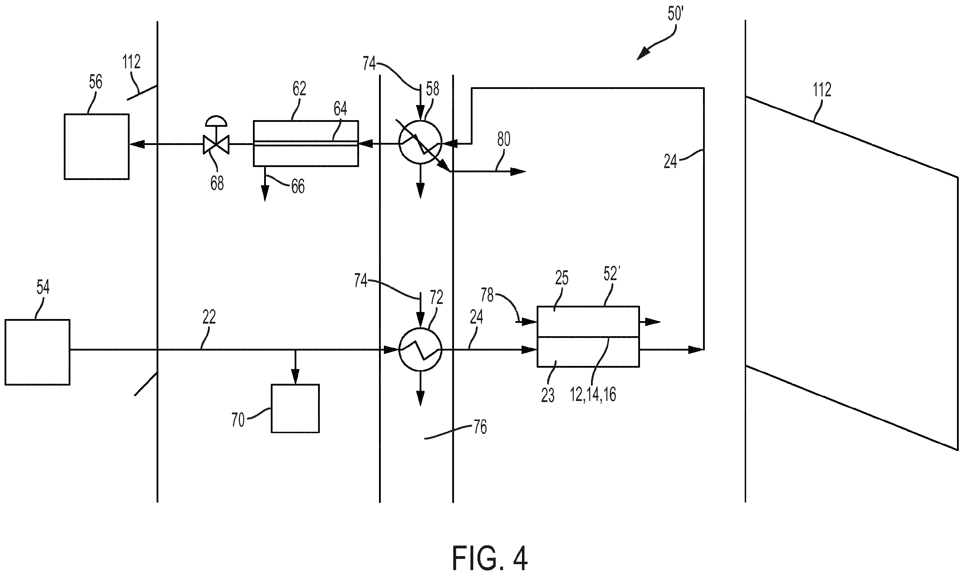

Turning to FIG. 4, an example embodiment of an inerting system 50' with a PEM electrochemical cell 52' onboard an aircraft is shown. As shown in FIG. 4, air from a compressed air source 54 such as a compressor section of a turbine fan engine is directed along a cathode supply fluid flow path 22 to a PEM electrochemical cell 52'. In some embodiments, some of the compressed air can be diverted to an additional pneumatic load such as an aircraft environmental control system 70. The hot compressed air is then passed through a heat exchanger that receives cooling air 74 from ram air duct 76 to cool the compressed air to a temperature suitable for the PEM electrochemical cell 52' (e.g., 50-120°C). A proton source 78 is directed to the anode side fluid flow path 25 (e.g., hydrogen gas for operation of the cell in fuel cell (power production) mode, or water for operation of the cell in electrolyzer (power consumption) mode). Condenser 58 receives wet inerting gas from the cathode side fluid flow path 22 and cools it with ram cooling air 74 to condense and remove water 80 from the inerting gas. The inerting gas is optionally then directed to a membrane separator 62 with a water-permeable tubular membrane 64 for removal of additional water 66 and subsequently through pressure control device 68 to protected space 56.

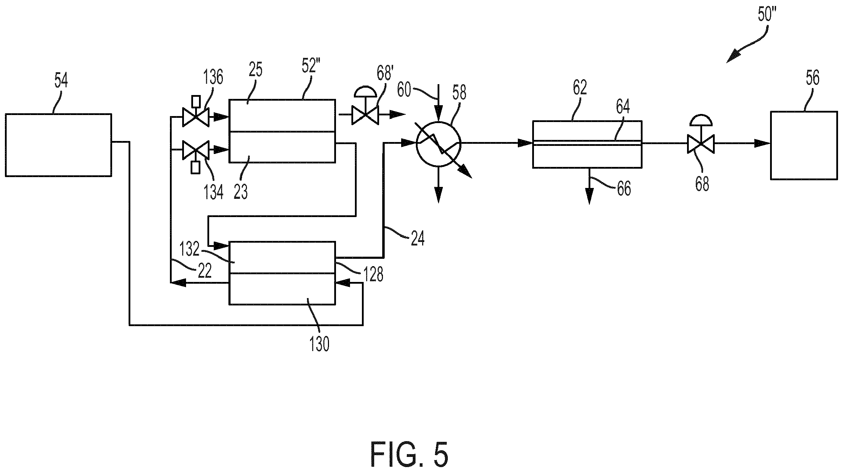

With reference now to FIG. 5, an example embodiment of an inerting system 50" with a solid oxide electrochemical cell stack 52" is shown. The system 50" includes a cathode heat recovery heat exchanger 128 with sides 130 and 132. The system 50" is arranged so cathode supply feed from the compressed air source 54 flows to the side 130 of the cathode heat recovery heat exchanger 128 where it is pre-heated, and then to both cathode side fluid flow path 23 and the anode side fluid flow path 25 of the solid oxide electrochemical stack 52" through the control valves 134 and 136. Oxygen-depleted air from the cathode side fluid flow path 23 is routed to side 132 of the cathode heat recovery heat exchanger 128 and then to condenser 58 and membrane separator 62 before being directed to the protected space 56. Pressure control device 68 maintains pressure on the inerting gas flow path 24 including the condenser 58, and pressure control device 68' maintains pressure on the cathode side of the electrochemical cell 52".When the solid oxide stack 52" is operating, cooling of anode process air may be necessary to remove heat from internal resistance losses resulting from irreversible processes. Optionally, the system 50" can include a temperature sensor proximate to the stack 52" in communication with the controller so that the flow of cooling air or heated air through the stack 52" can be controlled based on current temperatures. Additionally, when the solid oxide electrochemical stack 52" is running, the anode evolves oxygen. Flowing dilution air into the anode side of the stack through valve 136 can dilute oxygen exiting the anode, tailoring the concentration of oxygen in OEA and preventing highly concentrated oxygen from flowing through the aircraft, as hot oxygen is reactive and potentially dangerous. Adjusting dilution air running into the anode allows for specific gas composition (and oxygen concentration) exiting the anode. Similarly, if a high concentration exiting the anode side of stack 52" is desired for further use as an oxidant for combustion, then less dilution air can be used as long as the thermal regulation needs of solid oxide stack 52".

In another embodiment of an inerting system (not shown), an anode heat recovery heat exchanger with hot and cold sides can be included to recuperate heat from the anode process air. The system can be configured with an anode heat recovery heat exchanger and a cathode heat recovery heat exchanger or combinations thereof. In this case, the anode exhaust flows to the hot side of the anode heat recovery heat exchanger in order to pre-heat process gases flowing into the solid oxide electrochemical stack. The anode heat recovery heat exchanger can be located upstream of a condensing heat exchanger. Pressure control devices can maintain pressure on the anode exhaust and the inerting gas flow paths.

In addition to supplying ODA to ullage of the fuel tank(s) onboard the aircraft, the ODA may be also be used for other functions, such as serving as a fire-suppression agent. For example, cargo compartments onboard aircraft typically have fire-suppression systems that include a dedicated gas-distribution system comprising tubes routed to nozzles in the cargo bay to deploy fire-suppression agents in the event of a fire. A variety of fire-suppression agents may be deployed depending on the type and extent of the fire. In the case of a fire, all or some of the ODA could be routed to one or more of these fire-suppression distribution systems. This may be especially beneficial in the case of a hull breach during the aircraft descent when the cargo bay is becoming re-pressurized to reduce the ingress of oxygen that can feed the fire. In this case, the system may be operated to produce ODA at the maximum flow rate. The ODA could also be used to enable inerting coverage over extended periods, which may be in addition to, or in lieu of, dedicated low-rate discharge inerting systems in the cargo bay(s).

During operation, the system can be controlled by controller 36 to set fluid flow rates (e.g. feed rates of air to the cathode 14 or to the anode 16, or of water or water vapor in the air feed to the cathode 14 or CO₂ in the air feed to cathode 14 or anode 16, and the current or voltage levels produced by electric power source 20 to produce varying amounts of ODA in response to system parameters. Such system parameters can include, but are not limited to mission phase, temperature of the fuel in protected space(s) 56, oxygen content of the fuel in the case of a fuel tank protected space, oxygen content of gas in the protected space(s) 56, and temperature and/or pressure of vapor in the ullage of any fuel tank protected space(s), temperature and pressures in the electrochemical cell stack 52, and temperature, oxygen content, and/or humidity level of the inert gas. Accordingly, in some embodiments, the fuel tank ullage gas management system such as shown in FIGS. 3-5 can include sensors for measuring any of the above-mentioned fluid flow rates, temperatures, oxygen levels, humidity levels, or current or voltage levels, as well as controllable output fans or blowers, or controllable fluid flow control valves or gates. These sensors and controllable devices can be operatively connected to a system controller. In some embodiments, the system controller can be dedicated to controlling the fuel tank ullage gas management system, such that it interacts with other onboard system controllers or with a master controller. In some embodiments, data provided by and control of the fuel tank ullage gas management system can come directly from a master controller.

As mentioned above, in some embodiments, the system can be operated in an alternate mode as a fuel cell in which fuel (e.g., hydrogen) is delivered to the anode and air is delivered to the cathode. Depending on the fuel cell type, the fuel may be hydrogen, carbon monoxide, natural gas (primarily methane), or any other suitable reductant. At the anode, the fuel undergoes oxidation in which electrons are liberated whereas at the cathode, the reduction of oxygen ensues. Electricity produced by the electrochemical cell in a power production mode is delivered to a power sink such a power-consuming component or an electrical bus connected to one or more power-consuming components. In some embodiments, the system can be operated in a mode selected from a plurality of modes that include at least the above-described power-consuming mode and power-producing (fuel cell) mode (both of which produce ODA at the cathode), and can also optionally include other modes such as a start-up mode. In such embodiments, the electrical connection 18 (FIG. 2) would provide controllable connection to either a power source or a power sink.

The term "about", if used, is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for providing inerting gas to a protected space, comprising
an electrochemical cell (10) comprising a cathode (14) and an anode (16) separated by a separator (12) comprising an ion transfer medium;
a cathode fluid flow path in operative fluid communication with the cathode (14) between a cathode fluid flow path inlet and a cathode fluid flow path outlet;
a cathode supply fluid flow path between a pressurized gas source and the cathode fluid flow path inlet;
an anode fluid flow path in operative fluid communication with the anode (16), including an anode fluid flow path outlet;
an electrical connection to a power source or power sink;
an inerting gas flow path in operative fluid communication with the cathode fluid flow path outlet and the protected space, said inerting gas flow path including a condenser that receives inerting gas from the cathode fluid flow path outlet and a pressure control device configured along with the pressurized gas source to provide a pressure at the condenser greater than ambient pressure.

2. The system of claim 1, wherein the pressure control device and pressurized gas source are configured to provide a pressure at the condenser at which a dew point of the inerting gas is greater than 0°C.

3. The system of claim 1, wherein the pressure control device and pressurized gas source are configured to provide a pressure at the condenser at which a dew point of the inerting gas is greater than ambient temperature.

4. The system of claim 1, wherein the pressure control device and pressurized gas source are configured to provide a pressure greater than 29 psia, and preferably
wherein the pressure control device and pressurized gas source are configured to provide a pressure greater than 44 psia.

5. The system of any preceding claim, wherein the condenser comprises a heat exchanger with a heat rejection side in fluid communication with the inert gas flow
path and a heat absorption side in thermal communication with a heat sink, and preferably
wherein the heat absorption side of the condenser is in fluid communication with ambient air as said heat sink, and more preferably
wherein the inert gas flow path further includes a membrane dryer.

6. The system of any preceding claim, wherein the ion transfer medium comprises a proton exchange membrane, and the electrochemical cell is configured to produce protons at the anode and transfer the protons across the proton exchange membrane to the cathode.

7. The system of any of claims 1-5, wherein the ion transfer medium comprises a solid oxide, and the electrochemical cell is configured to produce oxygen
anions at the cathode and transfer the oxygen anions across the solid oxide ion transfer medium to the anode.

8. The system of any preceding claim, wherein the inerting gas flow path is further in operative communication with a fire suppression system.

9. An aircraft comprising an aircraft body and an engine, and the system of claim 1.

10. The aircraft of claim 9, wherein the protected space is selected from a fuel tank ullage space, a cargo hold, or an equipment bay.

11. The aircraft of claim 10, wherein the protected space comprises a fuel tank ullage space.

12. A method of inerting a protected space, comprising
delivering pressurized gas comprising oxygen to a cathode of an electrochemical cell;
reducing oxygen at the cathode to generate oxygen-depleted air at the cathode of the electrochemical cell;
directing the oxygen-depleted air from the cathode of the electrochemical cell along an inerting gas flow path to the protected space; and
condensing water vapor from the oxygen-depleted air in a condenser on the inerting gas flow path and keeping pressure at the condenser greater than ambient pressure.

13. The method of claim 12, wherein the pressure control device and pressurized gas source are configured to provide a pressure at the condenser at which a dew point of the inerting gas is greater than 0°C.

14. The method of claim 12, wherein the pressure control device and pressurized gas source are configured to provide a pressure at the condenser at which a dew point of the inerting gas is greater than ambient temperature.

15. The method of claim 14, wherein the pressure control device and pressurized gas source are configured to provide a pressure greater than 29 psia, and preferably
wherein the pressure control device and pressurized gas source are configured to provide a pressure greater than 44 psia.
